# EUROPEAN PATENT APPLICATION

(11) **EP 4 502 467 A1**
(43) Date of publication of application: **05.02.2025**
(21) Application number: 22857444.8
(22) Date of filing: 30.06.2022
(51) Int. Cl.: F22B 33/18, F22D 11/02, F24D 1/08

(54) **STEAM STABLE SUPPLY SYSTEM AND STEAM STABLE SUPPLY METHOD**

(30) Priority: 29.03.2022 CN 202210316872
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: ZHOU, Xianrong, Shenzhen, Guangdong 518124 (CN); JIANG, Caijun, Shenzhen, Guangdong 518124 (CN); ZHOU, Yuanqing, Shenzhen, Guangdong 518124 (CN); YE, Xiaobin, Shenzhen, Guangdong 518124 (CN)
(74) Representative: Westphal, Mussgnug & Partner, Patentanwälte mbB
(86) International application number: PCT/CN2022/103137
(87) International publication number: WO 2023/020131

(57) **Abstract**

A steam stable supply system and a steam stable supply method. The steam stable supply system comprises a solar heat collection tower (10), a temperature and pressure reducer (30), steam heat storage tanks (20), a first steam pipeline (41) and a first heat metering device (51), wherein the first heat metering device (51) is arranged at a steam outlet end of the solar heat collection tower(10), and measures the steam output quantity of the solar heat collection tower (10); the first steam pipeline (41) is connected between the steam outlet end of the solar heat collection tower (10) and the temperature and pressure reducer (30), and is used to convey steam to the temperature and pressure reducer(30); the steam heat storage tanks(20) are connected to the first steam pipeline(41) in parallel and connected between the steam outlet end of the solar heat collection tower (10) and the temperature and pressure reducer (30), and are used to store steam heat energy and convey, to the temperature and pressure reducer (30), steam generated by flash evaporation of water stored in the steam heat storage tanks (20); and the temperature and pressure reducer (30) is connected to a heat user side (100),and same reduces the temperature and pressure of the steam and then supplies the steam to the heat user side (100). The requirements of highly efficient heat exchange, long-term heat storage, and sustainable and stable supply of steam are satisfied, and the requirements for industrial production are satisfied.

## Description

### TECHNICAL FIELD

The present invention relates to the field of solar thermal energy technology, particularly to a steam stable supply system and steam stable supply method.

### BACKGROUND

The use of solar thermal energy to produce industrial steam can significantly save energy, reduce carbon emissions, and has excellent application prospects. However, solar energy is only available for use when there is sunlight, and it cannot be utilized during overcast days, rainy weather, or at night. Industrial production, on the other hand, requires continuous and stable operation. Therefore, using solar energy to produce industrial steam requires a system that can match the instability of solar energy with the continuous stability required for industrial production.

Existing thermal storage solutions mainly include solid heat storage, liquid heat storage, gas heat storage, phase change heat storage, and thermochemical adsorption heat storage technologies. In the field of solar thermal energy, heat transfer oil storage or molten salt storage are primarily used.

Among them, heat transfer oil storage is mainly suitable for situations requiring heat absorption of about 400°C. Sunlight is focused on the heat collection tube through trough-type or Fresnel-type concentrators, heating the heat transfer oil inside the tube. After being heated, the heat transfer oil is partially used to heat water in the steam generator to generate steam for electricity generation or other purposes, while the remaining heat transfer oil is stored and released when needed. Compared to high-temperature water storage, the advantage is that the heat storage equipment can operate at atmospheric pressure. Molten salt storage is mainly suitable for situations requiring heat absorption temperatures of 500°C to 600°C. Sunlight is focused on the heat collection tower through heliostats, heating the liquid molten salt inside the tower. After being heated, part of the molten salt is used to heat water in the steam generator to generate steam for electricity generation or other purposes, while the rest is stored and released when needed. Compared to high-temperature water storage, the advantage is that the heat storage equipment can operate at atmospheric pressure.

However, the above two thermal storage solutions have the following shortcomings:
1, Heat transfer oil is expensive, flammable, prone to thermal decomposition and coking, and has certain toxicity. It requires the installation of cold oil and hot oil tanks, antifreeze systems, and heat transfer oil regeneration systems, leading to a multitude of equipment, a complex system, and high initial investment.
2, Molten salt has low specific heat, requires a large amount, is costly, and has a high crystallization temperature, which can easily solidify and block equipment and pipes. Once blocked, it is difficult to clear. It requires the installation of cold salt and hot salt tanks, antifreeze systems, etc., leading to a multitude of equipment, a complex system, and high initial investment.
3 , Oil-water heat exchangers/salt-water heat exchangers are required, with the heat transfer medium isolated through pipes, resulting in temperature differences at the heat exchange ends and lower heat exchange efficiency.
4, Industrial steam parameters are generally 0.8 MPa.g and 180°C. Molten salt storage cannot work at this temperature as it solidifies, while heat transfer oil can operate within this range.However, it often results in an inefficient application, making it cost-ineffective.

### SUMMARY

The technical problem to be solved by the present invention is to provide a steam stable supply system and steam stable supply method that stably provides steam to heat users.

The technical solution adopted to solve the above technical problems in the present invention is as follows: providing a steam stable supply system comprising a solar thermal collector tower, a temperature and pressure reducer, a steam accumulator, a first steam pipe, and a first heat metering device; the first heat metering device is positioned at the steam outlet end of the solar thermal collector tower to detect the steam output of the solar thermal collector tower;
the first steam pipe is connected between the steam outlet end of the solar thermal collector tower and the temperature and pressure reducer, for transporting part or all of the steam output from the solar thermal collector tower to the temperature and pressure reducer; the steam accumulator is connected in parallel with the first steam pipe and is connected between the steam outlet end of the solar thermal collector tower and the temperature and pressure reducer, for storing the steam thermal energy from the solar thermal collector tower and transporting the steam generated by the flashing of the stored water to the temperature and pressure reducer;
the temperature and pressure reducer is connected to the heat user end to supply steam to the heat user end after temperature and pressure reduction.

Preferably, the steam stable supply system further includes a second steam pipe and a third steam pipe;
the second steam pipe is connected between the steam outlet end of the solar thermal collector tower and the steam inlet of the steam accumulator; the third steam pipe is connected between the steam outlet of the steam accumulator and the inlet of the temperature and pressure reducer;
steam shut-off valves are respectively provided on the first steam pipe, the second steam pipe, and the third steam pipe.

Preferably, the steam stable supply system further includes a make-up water unit for make-up of demineralized water to the steam accumulator;
the make-up water unit includes a make-up water pump and a make-up water pipe connected between the make-up water pump and the make-up water inlet of the steam accumulator; a make-up water valve and a check valve are provided on the make-up water pipe.

Preferably, the temperature and pressure reducer is a water spray temperature and pressure reducer.

Preferably, the make-up water unit further includes a water spray pipe connected between the temperature and pressure reducer and the make-up water pipe.

Preferably, the steam stable supply system further includes a condensate storage tank, a make-up water tank, and a return water pump connected between the condensate storage tank and the make-up water tank;
the condensate storage tank is connected to the heat user end, collecting and storing the condensate water from the heat user end, and transporting it to the make-up water tank via the return water pump.

Preferably, the drain outlet of the steam accumulator is connected to the make-up water tank via a drain pipe.

Preferably, the steam accumulator is equipped with a safety valve and a vacuum breaker valve.

Preferably, the steam stable supply system further includes a second heat metering device; the second heat metering device is provided between the temperature and pressure reducer and the heat user end, to measure the amount of steam supplied to the heat user end.

Preferably, the steam stable supply system further includes a blowdown tank and a blowdown pipe connected between the blowdown tank and the sewage outlet of the steam accumulator; a switch valve is provided on the blowdown pipe to control its opening and closing.

The present invention further provides a steam stable supply method, comprising the following steps:
S1. main control system compares the steam output from the solar thermal collector tower with the steam quantity required by the heat user end; when the steam output of the solar thermal collector tower more than or equal to the steam quantity required by the heat user end, execute S2; when the steam output of the solar thermal collector tower less than the steam quantity required by the heat user end and is higher than 0.1t/h,execute S3; when the steam output of the solar thermal collector tower is less than 0. 1t/h, execute S4;
S2. transporting the steam output from the solar thermal collector tower to the temperature and pressure reducer, and supplying it to the heat user end after temperature and pressure reduction;
S3. transporting the steam output from the solar thermal collector tower to the steam accumulator, storing the steam thermal energy by heating the water inside the steam accumulator; opening valve between the steam accumulator and the temperature and pressure reducer, and transporting the steam generated by the flashing of the stored water inside the steam accumulator to the temperature and pressure reducer, and then transporting it to the heat user end after temperature and pressure reduction;
S4. opening valve between the steam accumulator and the temperature and pressure reducer, and transporting the steam generated by the flashing of the stored water inside the steam accumulator to the temperature and pressure reducer,and then transporting it to the heat user end after temperature and pressure reduction.

Preferably, when the steam output from the solar thermal collector tower more than the steam quantity required by the heat user end, the step S2 further comprises:
opening valve between the solar thermal collector tower and the steam accumulator, transporting the remaining steam to the steam accumulator, heating the water inside the steam accumulator to store the remaining steam thermal energy.

The beneficial effects of the present invention are: With a steam accumulator connected to a solar thermal collector tower, it offers functions of heat exchange, heat storage, and heat release, simplifying the steam supply system, and meeting the demands for efficient heat exchange, long-term heat storage, and a sustainable stable steam supply, thus satisfying the needs of industrial production.

The invention applies to the field of industrial steam production using solar thermal energy, achieving heat storage and steam supply with a steam accumulator, realizing continuous and stable steam supply, and promoting the rapid application of solar thermal energy in industrial steam production.

### BRIEF DESCRIPTION OF THE DRAWINGS

The following will further illustrate the present invention in conjunction with the drawings and examples, where the drawings show:

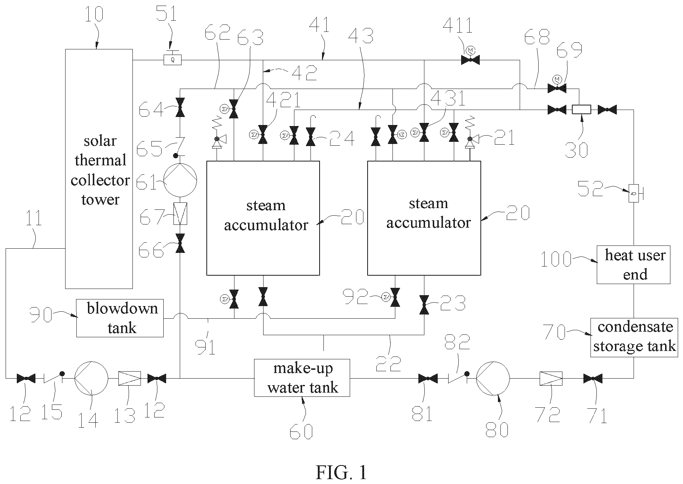

Figure 1 is a schematic diagram of a steam stable supply system according to an embodiment of the present invention.

### DETAILED DESCRIPTION

In order to have a clearer understanding of the technical features, objectives, and effects of the present invention, the specific embodiment is described in detail with reference to the accompanying drawings.

As shown in Figure 1, the steam stable supply system according to one embodiment of the present invention includes a solar thermal collector tower 10, a temperature and pressure reducer 30, a steam accumulator 20, a first steam pipe 41, a first heat metering device 51, and a second heat metering device 52.

Wherein the solar thermal collector tower 10 serves as a device for utilizing solar thermal energy to produce industrial steam, supplying the produced steam to a heat user end 100 for energy conversion and utilization. The first heat metering device 51 is set at the steam outlet end of the solar thermal collector tower 10 to detect the steam output of the solar thermal collector tower 10 and can also send the detected information of the steam output to a main control system (such as DCS main control).

The temperature and pressure reducer 30 is connected to the heat user end 100 to reduce the temperature and pressure of the steam entering it, and then supplies the reduced steam to the heat user end. The first steam pipe 41 connects between the steam outlet end of the solar thermal collector tower 10 and the temperature and pressure reducer 30, used for transporting part or all of the steam output from the solar thermal collector tower 10 to the temperature and pressure reducer 30.

The steam accumulator 20 is provided with at least one and is connected in parallel with the first steam pipe 41, and connected between the steam outlet end of the solar thermal collector tower 10 and the temperature and pressure reducer 30. It is used for storing the steam thermal energy from the solar thermal collector tower 10 as saturated hot water and transporting the steam generated by the flashing of the stored water inside to the temperature and pressure reducer 30. The second heat metering device 52 is provided between the temperature and pressure reducer 30 and the heat user end 100, to measure the amount of steam supplied to the heat user end 100. Moreover, it may have a cumulative function, capable of accumulating the amount of steam. The second heat metering device 52 can send the detected information of the steam amount to the main control system (such as DCS main control).

The parallel arrangement of the steam accumulator 20 and the first steam pipe 41 enables the system to adapt according to actual conditions, allowing the steam output from the solar thermal collector tower 10 to be sequentially supplied to the heat user end 100 through the first steam pipe 41 and the temperature and pressure reducer 30,or the steam from the solar thermal collector tower 10 to be stored in the steam accumulator 20 for thermal energy storage, and then supplied the steam through the steam accumulator 20.

Specifically, the upper end or top of the steam accumulator 20 is equipped with a steam inlet and a steam outlet, which are respectively used for the steam from the solar thermal collector tower 10 to enter and for the output of steam generated by flashing. The bottom of the steam accumulator 20 is equipped with a sewage outlet and a drain outlet, the sewage outlet is used to discharge high-concentration brine inside the steam accumulator 20, while the drain outlet is used for draining water to adjust the liquid level inside the steam accumulator 20 or for cleaning drainage, etc. Additionally, the steam accumulator 20 may be equipped with at least one safety valve 21 and a vacuum breaker valve 24. The safety valve 21 is used to release pressure when the pressure inside the steam accumulator 20 is too high, while the vacuum breaker valve 24 is used to eliminate the internal negative pressure issues in the steam accumulator 20 after the temperature inside the steam accumulator 20 has dropped following a shutdown.

In accordance with the connection of the steam accumulator 20 between the solar thermal collector tower 10 and the temperature and pressure reducer 30, the steam stable supply system of the present invention also includes a second steam pipe 42 and a third steam pipe 43. The second steam pipe 42 connects between the steam outlet end of the solar thermal collector tower 10 and the steam inlet of the steam accumulator 20, allowing steam output from the solar thermal collector tower 10 to enter the steam accumulator 20 through the second steam pipe 42. The third steam pipe 43 connects between the steam outlet of the steam accumulator 20 and the inlet of the temperature and pressure reducer 30, allowing the saturated liquid heated by steam in the steam accumulator 20 to generate steam through flashing, and transport it to the temperature and pressure reducer 30 via the third steam pipe 43.

Steam shut-off valves 411, 421, and 431 are respectively provided on the first steam pipe 41, the second steam pipe 42, and the third steam pipe 43, controlling the passage and opening degree of their respective pipes. The steam shut-off valves 411, 421, and 431 are also connected to the main control system, so that the steam shut-off valves 411, 421, and 431 can be controlled by the main control system to realize remote operation. The steam shut-off valves 411, 421, and 431 may further be optionally but not limited to electric globe valves.

The steam accumulator 20 of the present invention further includes a local PLC control cabinet, convenient for the operator to operate and monitor the steam accumulator 20 during inspections.

It is preferable to have two or more steam accumulators 20. With two or more steam accumulators 20, it is convenient to operate the corresponding number of steam accumulators 20 according to actual steam supply and energy storage requirements.

In this embodiment, the steam accumulators 20 are provided in two, which are connected in parallel, and each steam accumulator 20 is connected between the solar thermal collector tower 10 and the temperature and pressure reducer 30 via the second steam pipe 42 and the third steam pipe 43.

As an option, the steam accumulator 20 utilizes a mixed heat exchanger. High-temperature steam from the solar thermal collector tower 10 enters the mixed heat exchanger, where it directly mixes and contacts with the internal stored water for sufficient heat and mass transfer,forming high-temperature and high-pressure saturated water from the internal stored water. The mixed heat exchanger also has the capability of high-pressure heat storage.

Specifically, the steam accumulator 20 may include a horizontal cylinder body with at least one row of nozzles set inside the horizontal cylinder body,and the nozzle ends are connected to the steam inlet of the horizontal cylinder body. Inside the horizontal cylinder body, the nozzles are positioned below its central axis. When steam enters the steam accumulator 20, it is uniformly sprayed downward from the nozzles into the stored water inside the horizontal cylinder body, heating the water to a saturated state, which is the process of heat exchange and heat storage. During heat release, open the steam shut-off valve 431 corresponding to the steam outlet.Because the back pressure is less than the saturated steam pressure, the saturated water instantaneously flashes, releasing a large amount of steam. A steam-water separator can be installed at the steam outlet to prevent liquid water from entering the pipe, affecting the normal operation of the system.

When receiving steam output from the solar thermal collector tower 10 for energy storage, employ the method of filling one steam accumulator 20 first,and then filling the other steam accumulator 20. When there is a need for the steam accumulator 20 to supply flash steam to the heat user end 100, the steam accumulator 20 that is still storing heat but not yet full should be prioritized for steam supply.

The steam accumulator 20 may also include a liquid level monitoring device for monitoring the liquid level of demineralized water inside the tank. When the liquid level inside the steam accumulator 20 is higher than the preset high level or lower than the preset low level, an alarm is triggered to initiate appropriate measures or to alert operators to take appropriate measures.

The steam accumulator 20 also includes a local pressure gauge and a remote pressure gauge to detect and obtain pressure fluctuations inside the steam accumulator 20, which are used to judge the heat storage and flash evaporation process based on the pressure inside the steam accumulator 20.

For example, when the pressure inside the steam accumulator 20 reaches 3.1 MPa.g, it indicates the completion of heat storage in the steam accumulator 20. When the pressure drops to 0.9 MPa.g, it indicates that the flash evaporation process in the steam accumulator 20 has ended. When the pressure reaches 3.25 MPa.g, there is an abnormality in the safety valve 21 on the steam accumulator 20, which can further prompt the operator to check whether the safety valve 21 is working properly.

Corresponding to the steam accumulator 20, the steam stable supply system of the present invention further includes a make-up water unit for make-up of demineralized water to the steam accumulator 20. The steam accumulator 20 is equipped with a make-up water inlet.The make-up water unit may include a make-up water pump 61 and a make-up water pipe 62 connected between the make-up water pump 61 and the make-up water inlet of the steam accumulator 20. The make-up water inlet is equipped with a control valve 63 to control the opening and closing of the make-up water inlet. The control valve 63 is also connected to the main control system, enabling remote operation through the main control system. The control valve 63 is optionally but not limited to an electric shut-off valve.

The make-up water pipe 62 is equipped with a make-up water valve 64 and a check valve 65, which are respectively used to control the opening and closing of the make-up water pipe 62 and to prevent reverse flow of demineralized water. When there is no need to supplement the steam accumulator 20 with water, the control valve at the make-up water inlet of the steam accumulator 20 is in the closed position.

The make-up water pump 61 is further connected to make-up water tank 60, make-up water tank 60 serves as the water supply source for the make-up water unit. Between the make-up water pump 61 and the make-up water tank 60, there is also a first valve 66 and a first filtering device 67 (such as a straight-through filter) installed on the connecting pipe. The first valve 66 is used to control the opening and closing between the make-up water pump 61 and the make-up water tank 60, and the first filtering device 67 is used to filter the water entering the make-up water pump 61, removing solid impurities and other substances.

The make-up water tank 60 is also connected to the solar thermal collector tower 10 via inlet pipe 11, providing water to the solar thermal collector tower 10. The inlet pipe 11 is equipped with valve 12, and sequentially arranged filter 13, driver pump 14, and check valve 15. When supplying water to the solar thermal collector tower 10, water in the make-up water tank 60 is drive by the driver pump 14 to flows sequentially through the filter 13, the driver pump 14, the check valve 15,and then enters the solar thermal collector tower 10.

Understandably, the inlet pipe 11 can also be connected to the outlet end of the make-up water pump 61 as a branch pipe, allowing the make-up water tank 60 to supply water to the steam accumulator 20 and the solar thermal collector tower 10 through the same make-up water unit.

When the liquid level in the steam accumulator 20 reaches the preset high level through water make-up by the make-up water unit, or when steam enters the steam accumulator 20 causing the liquid level to reach the preset high level. The liquid level monitoring device sends a corresponding signal to the main control system, the main control system then closes the control valve 63 and the steam shut-off valve 421 on the steam inlet of the steam accumulator 20 to stop water make-up or the entry of steam. In situations where steam enters the steam accumulator 20 and causes the liquid level to reach the preset high level, after stopping steam entry, drainage should be carried out only after the flashing in the steam accumulator 20 has ended and the pressure has dropped below the working pressure, until the liquid level inside the tank is reduced to the set level. The operation of draining after the flashing has ended can reduce the flashing vibration during the drainage process, reduce energy loss, and reduce the design pressure of drain pipe 22 connected to drain outlet.

Similarly, when the liquid level in the steam accumulator 20 reaches the preset low level, the liquid level monitoring device sends a corresponding signal to the main control system. The main control system then starts the make-up water unit and opens control valve 63 to make up water for the steam accumulator 20 (after the pressure inside the tank is below working pressure), until the liquid level inside reaches the set level. For the steam accumulator 20 in a flash steam state, make-up water after the flash steam has ended can reduce the head of the make-up water pump 61, which reduces the investment and operating costs of the make-up water pump 61.

In this invention, the temperature and pressure reducer 30 reduces the temperature and pressure of high-temperature steam entering it, and outputs steam at the required pressure and temperature for the heat user end 100. Simultaneously, based on the steam quantity required by the heat user end 100, the output flow can be adjusted, thereby ultimately providing the heat user end 100 with steam at the desired pressure, temperature, and flow rate.

The temperature and pressure reducer 30 can be set as one or two. If set as two, one acts as primary and the other as standby to enhance system reliability. Shut-off valves are provided at the inlet and outlet ends of the temperature and pressure reducer 30 to control their opening and closing, as well as the degree of opening.

Preferably, the temperature and pressure reducer 30 is a water spray temperature and pressure reducer 30. For this purpose, it can be supplied with water by the make-up water unit. As shown in Figure 1, the make-up water unit also includes a water spray pipe 68 connected between the temperature and pressure reducer 30 and the make-up water pipe 62. A control valve 69 is provided on the water spray pipe 68 to control its opening and closing.

During operation of the temperature and pressure reducer 30, the control valve 69 is open. Under the drive of the make-up water pump 61, water in the make-up water tank 60 flows sequentially through the make-up water pipe 62 and the water spray pipe 68 into the temperature and pressure reducer 30. The control valve 69 can also be connected to the main control system,thereby allowing for remote operation via the main control system. The control valve 69 may further be, but is not limited to, an electric shut-off valve.

Furthermore, the steam stable supply system of the present invention includes a condensate storage tank 70, a make-up water tank 60, and a return water pump 80 connected between the condensate storage tank 70 and the make-up water tank 60.

The condensate storage tank 70 is connected to the heat user end 100 to collect and store condensate water (atmospheric steam condensate, temperature approximately 90°C) generated by the heat user end 100, and delivers it to the make-up water tank 60 via the return water pump 80. The make-up water tank 60 and the make-up water unit may both be connected to the same make-up water tank 60 or to tanks that are part of the same unit group.

Two recycling pumps 80 may be provided, one as primary and one as standby to enhance system reliability.

Additionally, the drain outlet of the steam accumulator 20 can be connected to the make-up water tank 60 via the drain pipe 22. Therefore, the make-up water tank 60 is not only used for supplying water to the solar thermal collector tower 10, the steam accumulator 20, and the temperature and pressure reducer 30, but also for collecting condensate from the heat user end 100, achieving the recovery and reuse of condensate.

Understandably, a control valve 23 is installed on the drain pipe 22 or at the drain outlet to control the opening and closing of the drain pipe 22.

Between the condensate storage tank 70 and the return water pump 80, there is also a second valve 71 and a second filtering device (such as a straight-through filter) 72 installed on the connecting pipe. The second valve 71 is used to control the opening and closing of the connecting pipe between the condensate storage tank 70 and the return water pump 80.The second filtering device 72 is used to filter the water entering the return water pump 80, removing solid impurities and other substances.

Additionally, the connecting pipe between the return water pump 80 and the make-up water tank 60 also has a control valve 81 to control the opening and closing of the connection, and a check valve 82 is installed to prevent the condensate water from flowing back.

A liquid level monitoring device may be installed on the condensate storage tank 70,and the liquid level monitoring device can connect separately to the return water pump 80,as can the second heat metering device 52. When the steam quantity measured by the second heat metering device 52 is greater than zero and the liquid level in the condensate storage tank 70 reaches a high level,the return water pump 80 is interlocked to deliver condensate water in the condensate storage tank 70 to the make-up water tank 60. The return water pump 80 stops when the liquid level in the condensate storage tank 70 is at a low level. When the steam quantity measured by the second heat metering device 52 is zero, the return water pump 80 is locked out and remains inoperative.

Furthermore, to achieve regular discharge and collection of the steam accumulator 20, the steam stable supply system of the present invention also includes a blowdown tank 90 and a blowdown pipe 91 connected between the blowdown tank 90 and the sewage outlet of the steam accumulator 20. Switch valve 92 is provided on the blowdown pipe 91 to control its opening and closing. High-concentration salt solution inside the steam accumulator 20 can be periodically discharged through the sewage outlet and then through the blowdown pipe 91 to the blowdown tank 90, the blowdown tank 90 then processes collected high-concentration salt solution.

The blowdown tank 90 may be selected as a blowdown flash tank .

During the operation of the steam stable supply system of the present invention, part of the steam output from the solar thermal collector tower 10 directly passes through the temperature and pressure reducer 30,where its temperature and pressure are reduced before it is supplied to the heat user end 100. Remaining steam enters the steam accumulator 20, heating the reserved water inside the tank until it becomes saturated water at the target pressure.When there is insufficient steam from the solar thermal collector tower 10, the corresponding steam shut-off valve 431 of the steam accumulator 20 is opened, allowing the hot water inside the steam accumulator 20 to flash into steam.The steam is reduced in temperature and pressure by the temperature and pressure reducer 30 and then supplied to the heat user end 100.

In summary, the steam stable supply system of the present invention is used to stably supply steam to the heat user end 100, with the supply route and method of steam being controlled by the main control system. Referring to Figure 1, the specific steps of the steam stable supply method for achieving the above are as follows:
S1.The main control system compares the steam output from the solar thermal collector tower 10 with the steam quantity required by the heat user end 100.

With reference to the above steam stable supply system, the steam output of the solar thermal collector tower 10 is detected by the first heat metering device 51, and the corresponding information is sent to the main control system.

When the steam output of the solar thermal collector tower 10 more than or equal to the steam quantity required by the heat user end 100, execute S2; when the steam output from the solar thermal collector tower 10 is insufficient (non-zero) (for example, insufficient sunlight or no sunlight) to meet the steam quantity required by the heat user end 100, execute S3; when the steam output of the solar thermal collector tower 10 is zero or less than 0.1t/h (for example, insufficient sunlight or no sunlight), execute S4.

S2. Transporting the steam output from the solar thermal collector tower 10 to the temperature and pressure reducer 30, and supplying it to the heat user end 100 after temperature and pressure reduction.

The steam after temperature and pressure reduction meets the required pressure and temperature of the heat user end 100. Additionally, the second heat metering device 52 is used to check if the steam flow delivered to the heat user end 100 meets the required flow rate. The steam flow delivered to the heat user end 100 can be adjusted by the shut-off valve at the outlet end of the temperature and pressure reducer 30.

Moreover, when the steam output from the solar thermal collector tower 10 more than the steam quantity required by the heat user end 100, step S2 also includes:

Opening valve between the solar thermal collector tower 10 and the steam accumulator 20, transporting the remaining steam to the steam accumulator 20, heating the water inside the steam accumulator 20 to store the remaining steam thermal energy.

For example, if the steam demand of the heat user end 100 is 2t/h, when the steam output from the solar thermal collector tower 10 exceeds 2.5t/h, open the steam shut-off valve 411 on the first steam pipe 41 that directly connects the solar thermal collector tower 10 and the temperature and pressure reducer 30, prioritize opening the steam inlet of the steam accumulator 20 with higher pressure, adjust the opening of the corresponding steam shut-off valve 411 of the steam inlet to maintain the outlet flow rate of 2t/h of the temperature and pressure reducer 30, until the pressure in the steam accumulator 20 reaches 3.1 MPa.g, then close the steam shut-off valve 411 of the steam accumulator 20. If the pressure of the other steam accumulator 20 is less than 3.1 MPa.g, then open the steam shut-off valve 411 of the steam inlet of this other steam accumulator 20, similarly adjust its opening to maintain the outlet flow rate of 2t/h of the temperature and pressure reducer 30. If both steam accumulators 20 reach 3.1 MPa.g, a full signal is issued, and the main control system adjusts the heliostat reflectivity based on the steam output flow from the solar thermal collector tower 10.

S3. Transporting the steam output from the solar thermal collector tower 10 to the steam accumulator 20, storing the steam thermal energy by heating the water inside the steam accumulator 20, opening valve between the steam accumulator 20 and the temperature and pressure reducer 30, and transporting the steam generated by the flashing of the stored water inside the steam accumulator 20 to the temperature and pressure reducer 30, and then transporting it to the heat user end 100 after temperature and pressure reduction.

In step S3, the steam output from the solar thermal collector tower 10 is transported to a steam accumulator 20 for energy storage, and the steam accumulator 20 is also used to supply steam to the heat user end 100 through the temperature and pressure reducer 30.

For example, if the steam demand of the heat user end 100 is 2t/h, when the steam output from the solar thermal collector tower 10 is greater than 0.1t/h and less than 1.9t/h, open the steam inlet of the steam accumulator 20 with a pressure greater than 0.9 MPa.g, close the steam shut-off valve 411 on the first steam pipe 41 that directly connects the solar thermal collector tower 10 and the temperature and pressure reducer 30, and then transport the steam generated by flashing and heat release from the steam accumulator 20 with pressure greater than 0.9 MPa.g to the temperature and pressure reducer 30, and then supply it to the heat user end 100. When the water temperature in the steam accumulator 20 is less than 0.9 MPa.g or less than 180°C due to flashing and heat release, open the steam inlet and steam outlet of another steam accumulator 20 with a pressure greater than 0.9 MPa.g, and simultaneously close the steam inlet and steam outlet of the steam accumulator 20 with a temperature less than 180°C.

When both steam accumulators 20 have pressures greater than 0.9 MPa.g, prioritize opening the steam inlet and steam outlet of the steam accumulator 20 with the lower pressure.When both steam accumulators 20 have water temperatures less than 180°C, issue a flash ending signal.

S4. Opening valve between the steam accumulator 20 and the temperature and pressure reducer 30, and transporting the steam generated by the flashing of the stored water inside the steam accumulator 20 to the temperature and pressure reducer 30, and then transporting it to the heat user end 100 after temperature and pressure reduction.

Before executing step S4, disconnect the solar thermal collector tower 10 and the steam accumulator 20, that is, close the steam inlet of the steam accumulator 20; or maintain the disconnection between the solar thermal collector tower 10 and the steam accumulator 20 (disconnection), that is, keep the steam inlet of the steam accumulator 20 closed.

For example, if the steam demand of the heat user end 100 is 2t/h, and the steam output from the solar thermal collector tower 10 is less than 0. 1t/h, open the steam outlet of the steam accumulator 20 with a pressure greater than 0.9 MPa.g to supply steam to the heat user end 100. When the water temperature in the steam accumulator 20 less than 180°C due to flashing and heat release, open the steam outlet of another steam accumulator 20 that meets the pressure requirement greater than 0.9 MPa.g to continue supplying steam to the heat user end 100, while closing the steam outlet of the steam accumulator 20 with a temperature less than 180°C. When both steam accumulators 20 have pressures less than 0.9 MPa.g, issue a flash ending signal.

Furthermore, during periods when the heat user end 100 does not require steam, when the steam flow output from the solar thermal collector tower 10 is less than the set value (such as 0.1t/h), close the steam inlet of the steam accumulator 20, that is, the steam accumulator 20 is not connected to the solar thermal collector tower 10. When the steam flow output from the solar thermal collector tower 10 is greater than the set value (such as 0. 1t/h), open the steam accumulator 20 with pressure less than 3.1 MPa.g for heat storage, and during this period, keep the steam outlet of the steam accumulator 20 closed until the pressure in the steam accumulator 20 reaches 3.1 MPa.g, then close the steam inlet of the steam accumulator 20. Follow the principle of opening only one steam accumulator 20 steam inlet at a time; if both steam accumulators 20 have a pressure less than 3.1 MPa.g, prioritize opening the steam inlet of the steam accumulator 20 with higher pressure for heat storage, and after filling, open the steam inlet of another steam accumulator 20 for heat storage. If both steam accumulators 20 reach 3.1 MPa.g, issue a full signal, and the main control system adjusts the heliostat reflectivity based on the steam output flow from the solar thermal collector tower 10.

For the steam stable supply system and the method of implementing the steam stable supply of the present invention, the volume of the steam accumulator 20 is calculated and set according to the operating time required and steam demand of the heat user end 100, ensuring that it matches the precise capacity of the steam accumulator 20.This fulfills the needs of the heat user end 100 and ensures that the system meets the requirements for efficient heat exchange, long-term heat storage, and sustainable stable steam supply.

The above description is only an embodiment of the present invention, and does not limit the scope of the invention. All equivalent structural changes or equivalent process transformations made using the description and drawings of the present invention, or directly or indirectly applied in other related technical fields, are also included within the scope of the patent protection of the present invention.

## Claims

1. A steam stable supply system, comprising a solar thermal collector tower, a temperature and pressure reducer, a steam accumulator, a first steam pipe, and a first heat metering device; the first heat metering device is positioned at the steam outlet end of the solar thermal collector tower to detect the steam output from the solar thermal collector tower;
the first steam pipe is connected between the steam outlet end of the solar thermal collector tower and the temperature and pressure reducer, for transporting part or all of the steam output from the solar thermal collector tower to the temperature and pressure reducer; the steam accumulator is connected in parallel with the first steam pipe and is connected between the steam outlet end of the solar thermal collector tower and the temperature and pressure reducer, for storing the steam thermal energy from the solar thermal collector tower and transporting the steam generated by the flashing of the stored water inside to the temperature and pressure reducer;
the temperature and pressure reducer is connected to the heat user end to supply steam to the heat user end after temperature and pressure reduction.

2. The steam stable supply system according to claim 1, further comprising a second steam pipe and a third steam pipe;
the second steam pipe is connected between the steam outlet end of the solar thermal collector tower and the steam inlet of the steam accumulator; the third steam pipe is connected between the steam outlet of the steam accumulator and the inlet of the temperature and pressure reducer;
steam shut-off valves are respectively provided on the first steam pipe, the second steam pipe, and the third steam pipe.

3. The steam stable supply system according to claim 1,further comprising a make-up water unit for make-up of demineralized water to the steam accumulator;
the make-up water unit comprises a make-up water pump and a make-up water pipe connected between the make-up water pump and the make-up water inlet of the steam accumulator; a make-up water valve and a check valve are provided on the make-up water pipe.

4. The steam stable supply system according to claim 3, wherein the temperature and pressure reducer is a water spray temperature and pressure reducer.

5. The steam stable supply system according to claim 3, wherein the make-up water unit further comprises a water spray pipe connected between the temperature and pressure reducer and the make-up water pipe.

6. The steam stable supply system according to claim 1, further comprising a condensate storage tank, a make-up water tank, and a return water pump connected between the condensate storage tank and the make-up water tank;
the condensate storage tank is connected to the heat user end, collecting and storing the condensate water from the heat user end, and transporting it to the make-up water tank via the return water pump.

7. The steam stable supply system according to claim 6, wherein the drain outlet of the steam accumulator is connected to the make-up water tank via a drain pipe.

8. The steam stable supply system according to claim 1, wherein the steam accumulator is equipped with a safety valve and a vacuum breaker valve.

9. The steam stable supply system according to any of claims 1 to 8, further comprising a second heat metering device; the second heat metering device is provided between the temperature and pressure reducer and the heat user end, to measure the amount of steam supplied to the heat user end.

10. The steam stable supply system according to claim 9, further comprising a blowdown tank and a blowdown pipe connected between the blowdown tank and the sewage outlet of the steam accumulator; a switch valve is provided on the blowdown pipe to control its opening and closing.

11. A steam stable supply method, comprising the following steps:
S 1. main control system compares the steam output from the solar thermal collector tower with the steam quantity required by the heat user end; when the steam output of the solar thermal collector tower more than or equal to the steam quantity required by the heat user end, execute S2; when the steam output of the solar thermal collector tower less than the steam quantity required by the heat user end and is higher than 0.1t/h, execute S3; when the steam output of the solar thermal collector tower is less than 0.1t/h, execute S4;
S2. transporting the steam output from the solar thermal collector tower to the temperature and pressure reducer, and supplying it to the heat user end after temperature and pressure reduction;
S3. transporting the steam output from the solar thermal collector tower to the steam accumulator, storing the steam thermal energy by heating the water inside the steam accumulator; opening valve between the steam accumulator and the temperature and pressure reducer, and transporting the steam generated by the flashing of the stored water inside the steam accumulator to the temperature and pressure reducer, and then transporting it to the heat user end after temperature and pressure reduction;
S4. opening valve between the steam accumulator and the temperature and pressure reducer, and transporting the steam generated by the flashing of the stored water inside the steam accumulator to the temperature and pressure reducer, and then transporting it to the heat user end after temperature and pressure reduction.

12. The steam stable supply method according to claim 11, wherein when the steam output from the solar thermal collector tower more than the steam quantity required by the heat user end, the step S2 further comprises:
opening valve between the solar thermal collector tower and the steam accumulator, transporting the remaining steam to the steam accumulator, heating the water inside the steam accumulator to store the remaining steam thermal energy.
